(19) Europäisches Patentamt
European Patent Office
Office européen des brevets

(11) EP 4 786 513 A1

(12) EUROPEAN PATENT APPLICATION

(43) Date of publication:
**05.08.2026 Bulletin 2026/32**

(21) Application number: **25382074.0**

(22) Date of filing: **04.02.2025**

(51) International Patent Classification (IPC):
***C08G 18/42*** *(2006.01)* ***B32B 27/18*** *(2006.01)*
***B32B 27/36*** *(2006.01)* ***B32B 27/40*** *(2006.01)*

(52) Cooperative Patent Classification (CPC):
**C08G 18/42**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **SABIC Global Technologies B.V.**
**4612 PX Bergen op Zoom (NL)**

(72) Inventors:
- **BOVEN, Gert**
  **6160 GA Geleen (NL)**
- **DEL AGUA HERNANDEZ, David**
  **6160 GA Geleen (NL)**
- **VAN DER WAL, Ronald**
  **6160 GA Geleen (NL)**

(74) Representative: **Algemeen Octrooi- en Merkenbureau B.V.**
**P.O. Box 645**
**5600 AP Eindhoven (NL)**

(54) **COATED ARTICLE**

(57) The present invention relates to an article comprising a carrier provided at least in part with a coating layer, wherein
- said carrier comprises or consists of a thermoplastic composition, said thermoplastic composition comprising polycarbonate,
- said coating layer is applied directly on said carrier and comprises or consists of polyurethane obtained by reacting at least one poly-isocyanate and at least one polyol,
- said thermoplastic composition comprises a hydroxy compound selected from the group consisting of
a polyol compound represented by formula (I):

$$HO\text{-}(R^1X)_m\text{-}A\text{-}(R^2Y)_n\text{-}H \qquad (I)$$

wherein $R^1$ and $R^2$ each independently represent an alkylene group having 1 or more carbon atoms, X and Y each independently represent oxygen, an ester group or a carbonate group, m and n each independently represent an integer, m+n is 5 to 500,
and A represents a single bond or a divalent organic group and
an acrylic compound represented by formula (II):

$$H\text{-}(CH_2\text{-}C(R^3)(C{=}O)OR^4)_p\text{-}(CH_2\text{-}C(R^5)(R^6OH))_q\text{-}(CH_2\text{-}C(R^7)(R^8))_r\text{-}H \qquad (II)$$

wherein $R^3$, $R^5$, and $R^7$ each independently represent H or an alkylene group having 1 or more carbon atoms, $R^4$, and $R^6$ each independently represent an alkylene group
having 1 or more carbon atoms, $R^8$ represents an aromatic group, p represents an integer, q represents an integer of at least 1, r represents an integer and p+q+r is 5 to 500 and
combinations thereof,
wherein the amount of the hydroxy compound is 0.1 to 1.0 wt.% based on the weight of the thermoplastic composition.

EP 4 786 513 A1

## Description

The present invention relates to a coated article. More in particular the present invention relates to an article comprising a carrier and a polyurethane coating layer applied directly on at least part of said carrier, wherein said carrier comprises or consists of a thermoplastic composition comprising polycarbonate.

Polycarbonate or polycarbonate based compositions are well known for their use in automotive applications, both exterior and interior. In order to protect such articles from scratching, weathering or chemicals a protective coating is typically applied. For example, head-lenses made out of polycarbonate are generally provided with a hardcoat of a few micrometers thick. Typically these are acrylic or siloxane based coatings.

In the automotive industry new requirements and standards are being put in place relating to the impact properties of front panels of automotive vehicles, in particular electric automotive vehicles. These requirements specify that front parts, such as front panels, should cause minimal damage to humans or animals in case of an accident, i.e. upon impact with a human or animal. This may be accomplished if in the respective part formation of sharp and/or brittle parts, resulting from the impact, is avoided. Similarly front parts should not break or be damaged by the impact. To an extent these requirements are being addressed by the actual design of the panel or part, yet at least in part these requirements are also affected by the properties of the coated part or panel. Thus, it is preferred that the part or panel shows at most ductile impact failure rather than brittle impact failure.

Apart from mechanics there is also an aesthetic requirement that the coating adheres sufficiently to the carrier and does not delaminate over time. This requirement is of particular importance for interior automotive applications like interior trim bezels, such as those integrated into the console, instrument panels door panels or mirrors.

The aesthetic requirement of the coated article relates not only to delamination of the coating layer but also to the surface appearance of the carrier.

This aesthetic requirement is also of particular importance for electrical/electronic devices such as housings of electrical/electronic devices, e.g. tablets and mobile telephones.

It is therefore an object of the present invention to provide for a coated article with sufficient or improved coating adhesion and/or wherein any negative effect of the coating on the mechanical properties of the carrier, i.e. the uncoated article, is reduced to a minimum or is even improved. A further object of the present invention is to provide an aesthetically appealing coated article.

In the prior art interactions between polyurethane and polycarbonate have been disclosed.

US2019/0232621 discloses a multi-layer article comprising i) a dense substrate layer including a polymeric composition, wherein the polymeric composition is a blend comprising a polycarbonate polymer, a toughening component including a rubber - modified monovinylidene aromatic thermoplastic including an impact modifier, and a filler including a wollastonite and ii) a cover layer of a polyurethane bonded directly to the dense substrate layer; wherein the amount of polyester in the polymeric composition is about zero or less than about 5 weight percent. According to this reference it was found that a substrate formed of an ABS (and particularly a mass ABS ) in combination with a specified maximum amount of polycarbonate together with a wollastonite filler results in improved adhesion performance (initial adhesion and adhesion after climate ageing) when overmoulded or painted with a polyurethane layer.

US2019/0153218 discloses a composite component comprising a) a carrier composed of a thermoplastic composition comprising

A) 55 to 75 parts by weight of at least one polymer selected from the group consisting of aromatic polycarbonate and aromatic polyester carbonate;

B) 25 to 45 parts by weight of at least one mixture comprising at least one polybutadiene - based graft polymer prepared by emulsion, suspension or solution polymerization and at least one polybutadiene free vinyl (co) polymer; and

C) 0.1 to 20.0 parts by weight (based in each case on the sum total of components A and B ) of at least one polymer additive, where the polybutadiene content based on the sum total of the parts by weight of components A and B is 10 % to 20 % by weight;

wherein the total content of butadiene - free vinyl (co) polymer from component B based on the sum total of the parts by weight of components A and B is 12% to 23% by weight, and where the sum total of the parts by weight of components A and B in the polycarbonate composition is normalized to 100; and b) at least one polyurethane layer selected from the group consisting of coating materials, foams and compact skins, comprising at least one poly-isocyanate component; least one polyfunctional H - active compound; and optionally at least one polyurethane additive and/ or processing aid; having a molar ratio of NCO- to H- active groups of 1:1 to 1.1 : 1.

US 2002/01670177 discloses a polycarbonate composition comprising (A) an aromatic polycarbonate and/or polyester-carbonate (B) a graft polymer and (C) a copolymer of styrene and at least one monomer containing at least one carboxyl group, the copolymer having a weight average molecular weight, M, equal to or greater than 10,500 g/mol.

According to this reference it was found that the addition of the copolymer (C) a considerable improvement in foam adhesion, in particular the foam adhesion with respect to polyurethane foams can be achieved.

US 5,688,837 discloses a method for adhering polyurethane foam to polycarbonate comprising a) providing nucleophilic reactive radicals on a polycarbonate surface, b) generating a polyurethane mix comprising at least one polyol and at least one diisocyanate, wherein said polyurethane mix exhibits an isocyanate index of greater than 82, and c) foaming the polyurethane mix on said polycarbonate surface. According to this reference the polycarbonate must have at least one type of nucleophilic reactive radical on its surface. The nucleophilic reactive radicals can be provided by processing as the polycarbonate is manufactured. Nucleophilic reactive radicals can be formed on the polycarbonate during polymerization. For example, bisphenol A polycarbonate that has been produced by a melt transesterification process contains hydroxyl nucleophilic reactive radicals.

US 2011/0027575 discloses a method for producing a composite material, comprising (i) producing a foamed polycarbonate moulding composition by injection moulding using chemical and/or physical foaming techniques, and (ii) applying a polyurethane reaction system on top of said polycarbonate moulding composition and allowing to cure.

US 2006/0151911 discloses a process for in-mold coating comprising (i) obtaining a mold having at least two cavities, (ii) molding a thermoplastic substrate in a first cavity, (iii) introducing the substrate into a second cavity, (iv) coating said substrate with lacquer, the coating being carried out under enhanced pressure and curing the lacquer. The method disclosed in this reference is said to be suitable for layer thicknesses of the lacquer in the range of from 0.01 to 3 mm.

WO2024/017706 describes a method for producing composite components with improved interlaminar bonding, the components comprising a carrier, comprising polycarbonate and at least one polyurethane layer that is in direct contact with this carrier. The invention also relates to composite components with improved interlaminar bonding, and to the use of a polycarbonate with defined OH content as a carrier material in the production of composite components with improved interlaminar bonding.

EP 4309865 describes a method for producing composite components with improved interlaminar bonding, the components comprising a carrier, comprising polycarbonate and at least one polyurethane layer that is in direct contact with this carrier. The invention also relates to composite components with improved interlaminar bonding, and to the use of a composition comprising polycarbonate and a special hydroxyl-group component as a carrier material in the production of composite components with improved interlaminar bonding.

While the prior art generally discloses articles based on materials comprising polycarbonate and which may be combined with a polyurethane coating or foam layer the prior art is silent with respect to the use of such materials in certain automotive applications, in particular the application in front panels for electrical vehicles, or in electrical/electronic devices such as housings of electrical/electronic devices, e.g. tablets and mobile telephones.

To that extent the present invention generally relates to an article comprising a carrier provided at least in part with a coating layer, wherein

- said carrier comprises or consists of a thermoplastic composition, said thermoplastic composition comprising polycarbonate,
- said coating layer is applied directly on said carrier and comprises or consists of polyurethane obtained by reacting at least one di-or-tri-isocyanate and at least one polyol,
- said thermoplastic composition comprises a hydroxy compound selected from the group consisting of

  a polyol compound represented by formula (I):

  $$HO\text{-}(R^1X)_m\text{-}A\text{-}(R^2Y)_n\text{-}H \qquad (I)$$

  wherein $R^1$ and $R^2$ each independently represent an alkylene group having 1 or more carbon atoms, X and Y each independently represent oxygen, an ester group or a carbonate group, m and n each independently represent an integer, m+n is 5 to 500, and A represents a single bond or a divalent organic group and
  an acrylic compound represented by formula (II):

  $$H\text{-}(CH_2\text{-}C(R^3)(C{=}O)OR^4)_p\text{-}(CH_2\text{-}C(R^5)(R^6OH))_q\text{-}(CH_2\text{-}C(R^7)(R^8))_r\text{-}H \qquad (II)$$

  wherein $R^3$, $R^5$, and $R^7$ each independently represent H or an alkylene group having 1 or more carbon atoms, $R^4$, and $R^6$ each independently represent an alkylene group having 1 or more carbon atoms, $R^8$ represents an aromatic group, p represents an integer, q represents an integer of at least 1, r represents an integer and p+q+r is 5 to 500 and combinations thereof,
  wherein the amount of the hydroxy compound is 0.1 to 1.0 wt.% based on the weight of the thermoplastic composition.

It was surprisingly found that the article according to the invention has an improved adhesion of the coating layer

to the carrier particularly after storage in high temperature and/or high humidity. Without willing to be bound to it the present inventors are of the opinion that the improved adhesion of the coating is obtained by the hydroxy compound (I) or (II) preventing or reducing hydrolysis of polycarbonate at the surface of the carrier. It is speculated that the hydroxy compound (I) or (II) prevents or reduces the formation of amino groups that catalyze hydrolysis of polycarbonate.

It was further found according to the invention that such hydroxy compounds (I) or (II) present in such amount in the thermoplastic composition of the carrier presents a low risk of a substantial decrease in the molecular weight of polycarbonate present in the carrier which leads to decrease in the mechanical properties.

Carrier

The carrier is typically obtained by moulding the thermoplastic composition such as injection moulding, extrusion moulding or compression moulding, preferably by injection moulding. Preferably the carrier consists of the thermoplastic composition. However, the carrier may also comprise further components such as compositions other than the thermoplastic composition that are in contact with the part of the carrier manufactured from the thermoplastic composition. For example, the carrier may be molded from two compositions wherein a first surface part of the carrier consists of the thermoplastic composition and another surface part does not consist of the thermoplastic composition. In the context of such an embodiment the coating layer is applied at least in part on the surface of the carrier consisting of the thermoplastic composition. Typically though, and in a preferred embodiment the carrier consists of the thermoplastic composition and is in the form of a moulded part, such as an injection moulded part in particular. The coating layer may cover the entire surface of the carrier or only part of it. For the avoidance of doubt it is to be understood that in the context of the present invention the coating layer is applied directly on the thermoplastic composition and there are no other layers between the coating layer and the thermoplastic composition. This may be achieved by applying the coating on the carrier directly after it has been manufactured in a moulding equipment.

The thermoplastic composition preferably comprises, based on the weight of the thermoplastic composition, at least 40 wt.%, more preferably at least 50 wt.%, more preferably at least 60 wt.%, more preferably at least 70 wt.%, more preferably at least 75 wt.%, more preferably at least 85wt.%, more preferably at least 95 wt.%, even more preferably at least 98 wt.% of polycarbonate.

The polycarbonate may be a single type of polycarbonate or a mixture of at least two different types of polycarbonate. Further, the polycarbonate may be a single grade or a mixture of different grades of polycarbonate of the same type, yet of different molecular weight, and/or different manufacturing method, and/or different amount of hydroxyl content, and/or different endcap level and/or different amount of Fries content.

Commercially available polycarbonate, in particular bisphenol A polycarbonate homopolymers, may be obtained by two distinct manufacturing methods.

In the so-called interfacial method one or more of a bisphenol, typically bisphenol A, is reacted with a carbonate source such as phosgene in a two phase liquid phase. Such two-phase system consists of an organic phase and an aqueous phase. The reaction typically takes place at the interface of the two phases where the growing polymer chains stay dissolved in the organic phase. The interfacial polymerisation is typically stopped by addition of an end-capping agent such as in particular phenolic end-capping agents like phenol, tert-butyl-phenol and para-cumyl-phenol. As a result, interfacial polycarbonate typically does not, or hardly, contain any phenolic hydroxyl groups. Notwithstanding the foregoing methods have been disclosed in the prior art to increase the amount of hydroxyl groups in interfacial polycarbonate. Such methods are disclosed for example in US 5,567,802 and 5,886,073 the contents of which are incorporated herein by reference.

In the so-called melt method, sometimes called melt transesterification method or melt polycondensation method, one or more of a bisphenol, typically bisphenol A, is reacted with a diarylcarbonate such as in particular diphenyl carbonate. This reaction is carried out in a molten phase consisting of the raw materials and optionally one or more of a catalyst. No solvent is used and the reaction medium is mono-phasic. In this method the bisphenol A reacts with the diphenyl carbonate thereby releasing phenol which is withdrawn from the reaction medium. Typically no endcapping agent is added in the melt process and accordingly the level of phenolic hydroxyl groups in melt polycarbonate is much higher as compared to interfacial polycarbonate. Apart from having a much higher phenolic hydroxyl group content melt polycarbonate is further distinct from interfacial polycarbonate in that it contains branching units as a result of Fries rearrangement reactions taking place at the relatively higher temperature at which the transesterification is carried out. The difference between "melt polycarbonate" and "interfacial polycarbonate" is well-known to a skilled person.

Said polycarbonate can comprise a first polycarbonate having a hydroxyl content of at least 250 ppm determined in accordance with the method set out in the description and a second polycarbonate having a hydroxyl content of less than 250 ppm determined in accordance with the method set out in the description. The polycarbonate has hydroxy groups mostly at its terminal ends.

Preferably, the amount of the first polycarbonate based on the weight of the polycarbonate is at least 50 wt.%, more preferably at least 75 wt.%, more preferably at least 90 wt.%, more preferably at least 95 wt.%. More preferably the

polycarbonate consists of the first polycarbonate, meaning that other than the first polycarbonate no further polycarbonate is present in the polycarbonate.

This leads to an improved adhesion of the coating to the carrier. Without willing to be bound to it the present inventors are of the opinion that the improved coating, i.e. the improved adhesion of the coating, is obtained because part of the isocyanate groups of the two-component polyurethane coating may react with the phenolic OH groups that are naturally present on the melt polycarbonate chains. From these isocyanate groups polyurethane chains may grow forming an at least partially cross-linked coating layer that is chemically bonded to the carrier.

Preferably, the first polycarbonate has a hydroxyl content of at least 500ppm, more preferably at least 700 ppm, determined in accordance with the method set out herein. The hydroxyl content of the first polycarbonate and/or of polycarbonate may be at most 2500 ppm, preferably at most 2000 ppm, more preferably at most 1500 ppm or even more preferably at most 1250 ppm.

The use of the hydoxyl compound according to the invention in combination with a higher amount of the first polycarbonate and/or a higher hydroxyl content of the first polycarbonate results in a coated article with a particularly high adhesion.

In other embodiments, the amount of the second polycarbonate having a hydroxyl content of less than 250 ppm based on the weight of the polycarbonate is at least 50 wt.%, at least 75 wt.%, at least 90 wt.% or at least 95 wt.%. The polycarbonate can consist of the second polycarbonate, meaning that other than the second polycarbonate no further polycarbonate is present in the polycarbonate. The present invention advantageously provides a coated article with a relatively high adhesion even when the polycarbonate has a relatively low hydroxyl content.

The first polycarbonate may be a melt polycarbonate or an interfacial polycarbonate. The second polycarbonate may be a melt polycarbonate or an interfacial polycarbonate. The polycarbonate of the thermoplastic composition may consist of melt polycarbonate or may consist of interfacial polycarbonate.

Preferably the first polycarbonate consists of one or more bisphenol A polycarbonate homopolymers. Preferably the second polycarbonate consists of one or more bisphenol A polycarbonate homopolymers. It is further preferred that the polycarbonate consists of one or more bisphenol A polycarbonate homopolymers. For the avoidance of doubt the term "polycarbonate" may include a mixture of polycarbonates.

The polycarbonate of the thermoplastic composition preferably comprises, essentially consists or consists of bisphenol A polycarbonate homopolymer(s). The amount of bisphenol A polycarbonate homopolymer(s) in the thermoplastic composition with respect to the polycarbonate in the thermoplastic composition may e.g. be at least 90 wt.%, at least 95 wt.%, at least 98 wt.%, at least 99 wt.%, at least 99.5 wt.%, at least 99.9 wt.% or 100 wt.%.

The polycarbonate preferably has a melt volume rate of from 4 - 40 $cm^3$/ 10 min., preferably from 5 - 32 $cm^3$/ 10 min. such as from 10 - 26 $cm^3$/ 10 min., as measured in accordance with ISO 1133 (1.2 kg, 300°C). The first polycarbonate preferably has a melt volume rate of from 4-40 $cm^3$/ 10 min., preferably from 5 - 32 $cm^3$/ 10 min. such as from 10 - 26 $cm^3$/ 10 min., as measured in accordance with ISO 1133 (1.2 kg, 300°C).

It is preferred that the polycarbonate has an endcap level (EC%) of at most 85%, preferably from 25 - 85%, more preferably from 30 to 80%, 50 to 80% or 55 to 75%, wherein the endcap level is calculated with the following Formula I

$$\%EC = 100 - \left(\frac{ppmOH \times Mn}{340000}\right) \qquad \text{I}$$

wherein %EC is the endcap level, ppmOH is the content of hydroxyl groups in parts per million by weight and Mn is the number average molecular weight of the polycarbonate based on polycarbonate standards and determined using gel permeation chromatography. The content of hydroxyl groups can be determined using UV spectroscopy.

In the embodiment where the first polycarbonate is a melt polycarbonate, the melt polycarbonate preferably has a Fries branching, or Fries content, of from 100 - 2000 ppm, such as from 100 -1500 or 400 - 1200 ppm, or 800 - 1700 ppm such as from 1000 - 1500 ppm.

Hydroxy compound

The thermoplastic composition according to the invention comprises one or more hydroxy compound. The hydroxy compound is selected from the group consisting of one or more of a polyol compound (I), one or more of an acrylic compound (II) and combinations thereof.

Polyol compound (I)

The thermoplastic composition preferably comprises one or more of a polyol compound represented by formula (I):

$$HO-(R^1X)_m-A-(R^2Y)_n-H \qquad (I)$$

wherein $R^1$ and $R^2$ each independently represent an alkylene group having 1 or more carbon atoms, X and Y each independently represent oxygen, an ester group or a carbonate group, m and n each independently represent an integer, m+n is 5 to 500, and A represents a single bond or a divalent organic group. Preferably, the amount of the compound (I) is 0.1 to 1.0 wt% based on the weight of the thermoplastic composition.

In formula (I), m+n may be 5 to 300, preferably from 10 to 200, more preferably from 20 to 100.

The polyol compound (I) may be a block polymer or a random polymer.

When m is 2 or more,

$R^1$ in different $R^1X$ groups may represent alkylene groups identical to each other or may represent alkylene groups having different number of carbon atoms, and
X in different $R^1X$ groups may be identical to each other, or may be different from each other.

For example, $-(R^1X)-_m$ may comprise units $-(R^{1a}X^a)-$, $-(R^{1a}X^b)-$, $-(R^{1b}X^a)-$ and $-(R^{1b}X^b)-$

wherein $R^{1a}$ and $R^{1b}$ are identical and $X^a$ and $X^b$ are the same;
wherein $R^{1a}$ and $R^{1b}$ are identical and $X^a$ and $X^b$ are different;
wherein $R^{1a}$ and $R^{1b}$ are different and $X^a$ and $X^b$ are the same; or
wherein $R^{1a}$ and $R^{1b}$ are different and $X^a$ and $X^b$ are different.

When n is 2 or more,

$R^2$ in different $R^2Y$ groups may represent alkylene groups identical to each other, or may represent alkylene groups having different number of carbon atoms, and
Y in different $R^2Y$ groups may be identical to each other, or may be different.

For example, $-(R^2Y)-_n$ may comprise units $-(R^{2a}Y^a)-$, $-(R^{2a}Y^b)-$, $-(R^{2b}Y^b)-$, $-(R^{2a}Y^b)-$,

wherein $R^{1a}$ and $R^{1b}$ are identical and $X^a$ and $X^b$ are the same;
wherein $R^{1a}$ and $R^{1b}$ are identical and $X^a$ and $X^b$ are different;
wherein $R^{1a}$ and $R^{1b}$ are different and $X^a$ and $X^b$ are the same; or
wherein $R^{1a}$ and $R^{1b}$ are different and $X^a$ and $X^b$ are different;

Preferably, $R^1$ and $R^2$ each independently represent an alkylene group having 1 to 10 carbon atoms, more preferably 1 to 6 carbon atoms.

Examples of the alkylene group represented by each of $R^1$ and $R^2$ include a methylene group, an ethylene group, a trimethylene group, a propylene group, a tetramethylene group, and a hexamethylene group. Preferably, $R^1X$ is $R^1O$, i.e. a polyoxyalkylene group. The polyoxyalkylene group represented by $(R^1O)_m$ can be a group having a single type of oxyalkylene unit as the repeating unit. For example, the polyoxyalkylene group represented by $(R^1O)_m$ can be a polyoxyethylene group, a polyoxypropylene group or a polyoxytetramethyl group.

The polyoxyalkylene group represented by $(R^1O)_m$ can be a group having oxyalkylene units having different number of carbon atoms as repeating units. For example, the polyoxyalkylene group represented by $(R^1O)_m$ may comprise oxyethylene units and oxypropylene units as repeating units.

Preferably, A represents a single bond. Preferably, the polyol compound (I) is a polyether compound represented by

$$HO-(R^1O)_m-(R^2O)_n-H$$

When A represents a divalent organic group, the divalent organic group may be represented e.g. by the following formula (a).

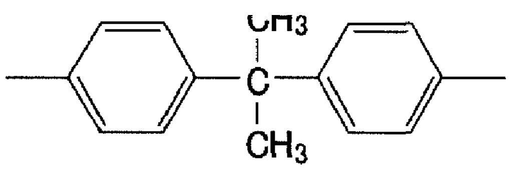

(a)

Specific examples of the polyol compound (I) being a polyether compound include polyethylene glycol, polypropylene glycol, polytetramethylene glycol, polyoxytetramethylene-polyoxyethylene glycol, polyoxyethylene-bisphenol A ether, polyoxypropylene-bisphenol A ether, polyoxyethylene-polyoxypropylene-bisphenol A ether. Those compounds are available as commercial products, and for example, "UNIOX (trademark)", "UNIOL (trademark)", "UNILUB (trademark)", "UNISAFE (trademark)", "POLYCERIN (trademark)", or "EPIOL (trademark)", which is manufactured by NOF Corporation, can be used.

Preferably, the polyol compound (I) is selected from the group consisting of polyethylene glycol, polypropylene glycol, polytetramethylene glycol and polyoxytetramethylene-polyoxyethylene glycol and combinations thereof.

Particularly preferably, the polyol compound (I) is polyethylene glycol, for example PEG200 or PEG400.

Preferably, the polyol compound (I) is polyethylene glycol having a hydroxyl value of 100 to 1000 mgKOH/g, more preferably 150 to 450 mgKOH/g.

Preferably, the number-average molecular weight of the polyol compound (I) is from 100 to 10,000, more preferably from 200 to 8,000, still more preferably from 300 to 5,000.

In some embodiments, X and Y in formula (I) are an ester group, i.e. the hydroxy-terminated compound (I) may be an aliphatic hydroxy terminated polyester. The aliphatic hydroxy terminated polyester may be prepared from aliphatic diacids such as adipic acid and aliphatic diols such as tetramethylene diol, hexamethylene diol, or prepared from aliphatic hydroxyacids like caprolactone.

In some embodiments, X or Y formula (I) are a carbonate group, i.e. the hydroxy-terminated compound (I) may be an aliphatic hydroxy terminated polycarbonate. The aliphatic hydroxy terminated polycarbonate may be prepared from aliphatic diols such as tetramethylene diol or hexamethylene diol and polymerized by known methods.

<u>Acrylic compound (II)</u>

The thermoplastic composition can comprise one or more of an acrylic compound represented by formula (II):

$$H\text{-}(CH_2\text{-}C(R^3)(C{=}O)OR^4)_p\text{-}(CH_2\text{-}C(R^5)(R^6OH))_q\text{-}(CH_2\text{-}C(R^7)(R^8))_r\text{-}H \qquad (II)$$

wherein $R^3$, $R^5$, and $R^7$ each independently represent H or an alkylene group having 1 or more carbon atoms, $R^4$, and $R^6$ each independently represent an alkylene group having 1 or more carbon atoms, $R^8$ represents an aromatic group, p represents an integer, q represents an integer of at least 1, r represents an integer and p+q+r is 5 to 500.

The compound (II) is commercially available as Joncryl® type of materials.

Preferably, $R^3$, $R^5$, and $R^7$ each independently represent H or an alkylene group having 1 to 10 carbon atoms, preferably H or an alkylene group having 1 to 6 carbon atoms.

Preferably, $R^4$, and $R^6$ each independently represent an alkylene group having 1 to 10 carbon atoms, preferably an alkylene group having 1 to 10 carbon atoms, preferably H or an alkylene group having 1 to 6 carbon atoms.

Preferably, the amount of the compound (II) is 0.1 to 1.0 wt% based on the weight of the thermoplastic composition.

The amount of the hydroxy compound in the thermoplastic composition is from 0.1 to 1.0 wt.%, preferably from 0.2 to 0.9 wt.%, based on the weight of the thermoplastic composition.

Preferably, the thermoplastic composition comprises, based on the weight of the thermoplastic composition, from 0.2 to 0.7 wt.%, of the hydroxy compound. This results in a good adhesion while retaining the molecular weight of the polycarbonate in the carrier.

<u>Further components</u>

The thermoplastic composition may further comprise a polymer selected from the group consisting of polyethyleneterephthalate, poly-butyleneterephthalate, acrylonitrile-butadiene-styrene copolymer, styrene-acrylonitrile copolymer, optionally functionalised polypropylene, optionally functionalised polyethylene, optionally functionalised polyolefin elastomer, (meth)acrylic acid-polybutadiene core- shell copolymers, and mixtures of at least two of the foregoing. It is however preferred that the thermoplastic composition does not comprise any polymers other than polycarbonate, the polyol compound and optionally polymers used for imparting flame retardant behaviour such as PTFE.

The thermoplastic composition may comprise known additives such as colorants, fillers, reinforcing fillers or fibers, anti-oxidants, UV stabilisers, flame retardants and the like.

It is however preferred that the thermoplastic composition does not comprise or does not substantially comprise components that may negatively affect the adhesion of the coating to the carrier and/or other mechanical properties.

In some embodiments, the thermoplastic composition does not comprise an anti-static agent or comprises an anti-static agent in an amount of less than 5000 ppm, less than 3000 ppm, less than 1000 ppm, less than 500 ppm or less than 100 ppm, based on the weight of the thermoplastic composition. An anti-static agent may migrate to the surface of the

carrier and, depending also on the type of anti-static agent, may negatively affect the adhesion of the polyurethane.

In some embodiments, the thermoplastic composition comprises glycerol mono-stearate. Glycerol mono-stearate is typically used as a mold release agent. In some embodiments, the thermoplastic composition does not comprise glycerol mono-stearate or comprises glycerol mono-stearate in an amount of less than 1000 ppm, less than 500 ppm or less than 100 ppm based on the weight of the thermoplastic composition.

In some embodiments, the thermoplastic composition comprises a mold release agent. In some embodiments, the thermoplastic composition does not comprise a mold release agent or comprises a mold release agent in an amount of less than 1000 ppm, less than 500 ppm or less than 100 ppm, based on the weight of the thermoplastic composition.

According to the invention, it was observed that n-butyl tosylate negatively affects the adhesion of the coating to the carrier. In some embodiments, the thermoplastic composition does not comprise n-butyl tosylate or comprises butyl tosylate in an amount of less than 10 ppm, less than 5 ppm or less than 3 ppm, based on the weight of the thermoplastic composition.

According to the invention, it was observed that phosphorous acid negatively affects the adhesion of the coating to the carrier. In some embodiments, the thermoplastic composition does not comprise phosphorous acid or comprises phosphorous acid in an amount of less than 10 ppm, less than 5 ppm or less than 3 ppm, based on the weight of the thermoplastic composition.

n-butyl tosylate and phosphorous acid are typically used as an acid stabiliser. In some embodiments, the thermoplastic composition does not comprise an acid stabiliser selected from the group consisting of sulfonic acid, a sulfonic acid ester, an organophosphorous acid and an organophosphorous acid ester or comprises said acid stabiliser in a total amount of less than 10 ppm, less than 5 ppm or less than 3 ppm, based on the weight of the thermoplastic composition.

The thermoplastic composition can be prepared by melt-mixing the components e.g. in an extruder. The polyol compound, e.g. PEG, can be dosed to the extruder as liquid by using a suitable solvent.

## Coating

The coating layer in the article of the present invention is obtained by coating the carrier with a liquid coating comprising at least one poly isocyanate and at least one polyol. The resulting coating is a polyurethane coating. The poly-isocyanate is preferably a diisocyanate or a tri-isocyanate or a mixture of di- and tri-isocyanates. A single poly-isocyanate or a mixture of different poly-isocyanates may be applied. Similarly a single polyol or a mixture of different polyols may be applied. Preferably the polyol is a diol, i.e. a compound having two hydroxyl functionalities.

Two component polyurethane coatings are known to the skilled person per se and in principle any available such coating system may be applied in the context of the present invention.

In the context of the invention the coating layer is not foamed, i.e. the coating layer is substantially free of voids provided it is acknowledged that in a typical wet coating process the (unintentional) formation of small voids or bubbles may not always be prevented.

The desired properties of the coating layer are obtained by selecting the appropriate poly-isocyanate and polyol, in addition to the isocyanate index. The isocyanate index corresponds to the ratio of free isocyanate groups to isocyanate reactive groups such as hydroxyl groups from the polyol, amine and water, before reaction occurs. For the avoidance of doubt the hydroxyl content of the polycarbonate is not taken into consideration for calculation of the isocyanate index. An isocyanate index of 1 indicates that there are the same number of equivalents of isocyanate as there are the number of equivalents of hydroxyl groups, amine groups (if any) and water (if any). Typically no amine groups and water is present. Water has two equivalents per mole, a primary amine has two and a secondary amine has one. The isocyanate index is preferably from 0.90 to 1.2, more preferably from 0.95 to 1.1. In particular for polycarbonates having a high number of hydroxyl groups a somewhat higher iso-cyanate index may be preferred compared to polycarbonate with a lower amount of hydroxyl groups.

The coating layer, after curing, is preferably is at least 50 μm, preferably at least 100 μm, more preferable at least 250 μm and at most 5000 μm, preferably at most 4000 μm, more preferably at most 2500 μm.

## Panel

The article of the present invention is preferably an automotive interior or exterior article or electrical/electronic devices such as housings of electrical/electronic devices, e.g. tablets and mobile telephones.

The automotive interior article may be comprised in or constitute a dashboard, instrument panel, console, display, functional surface trims, door trims, mirror trims and the like.

The automotive exterior article may be comprised in or constitute a front, side or rear panel of a vehicle.

In particular, the article may be comprised in or constitute a vehicle front panel such as a front panel of a car, a truck, or a bus. In such an application the coating layer is exposed towards the driving direction, i.e. outwards. More

preferably the article is comprised in or constitutes a front panel of an electrical vehicle such as an electrical car, truck or bus. For the avoidance of doubt, the present invention is directed at the use of the article as part of or as a front panel as described above.

The present invention further relates to a vehicle, such as a fossil fuel based car, truck or bus, an electrical car, truck or bus, or an electrical and fossil fuel based hybrid car, truck or bus comprising an article in accordance with the invention disclosed herein.

Method

The present invention further relates to a method for the manufacture of the article disclosed herein, the method comprising the steps of

i) injecting an amount of thermoplastic composition in a mould thereby forming said carrier by means of injection moulding,
ii) cooling the injection moulded article,
iii) applying a two-component polyurethane coating containing at least one poly-isocyanate and at least one polyol directly on at least part of the injection moulded article,
iii) curing the coating,

wherein said thermoplastic composition comprises a hydroxy compound selected from the group consisting of a polyol compound represented by formula (I):

$$HO-(R^1X)_m-A-(R^2Y)_n-H \qquad (I)$$

wherein $R^1$ and $R^2$ each independently represent an alkylene group having 1 or more carbon atoms, X and Y each independently represent oxygen, an ester group or a carbonate group, m and n each independently represent an integer, m+n is 5 to 500, and A represents a single bond or a divalent organic group and
an acrylic compound represented by formula (II):

$$H-(CH_2-C(R^3)(C{=}O)OR^4)_p-(CH_2-C(R^5)(R^6OH))_q-(CH_2-C(R^7)(R^8))_r-H \qquad (II)$$

wherein $R^3$, $R^5$, and $R^7$ each independently represent H or an alkylene group having 1 or more carbon atoms, $R^4$, and $R^6$ each independently represent an alkylene group having 1 or more carbon atoms, $R^8$ represents an aromatic group, p represents an integer, q represents an integer of at least 1, r represents an integer and p+q+r is 5 to 500 and combinations thereof,
wherein the amount of the hydroxy compound is 0.1 to 1.0 wt.% based on the weight of the thermoplastic composition.

It is preferred that the cooled injection moulded article of step ii) is transferred to a second cavity and that at least step iii) is carried out in that second cavity.

It is further preferred that prior to application of the coating in step iii) at least a part of the to be coated surface of the injection moulded article is subjected to a corona or flame treatment in order to further increase the amount of hydroxyl groups on the surface of the injection moulded part.

Typically the method is carried out in a process known as a flood coating or in-mould coating process. In such a process the carrier is manufactured via injection moulding in an injection moulding equipment. After injection of the thermoplastic composition the so formed carrier is cooled until it has sufficiently solidified. Then, while the carrier is still in the mould a coating is injected to coat at least one side, or part thereof, of the carrier. This may be carried out in the same mould or preferably in a second cavity as indicated above. The coating is then cured, typically under pressure, until the carrier can be removed from the mould. After the carrier is taken from the mould the coating may or may not yet be fully cured.

The present invention will now be further elucidated based on the following non-limiting examples.

Measurement methods

| | |
|---|---|
| Fries content | The amount of Fries branching was determined using an Agilent 1100series HPLC equipped with a MWD G1365B detector. The column is an Agilent Zorbax Eclipse XDB-C18 4.6 x 75 mm. The injection volume is 50ml. The oven temperature is 35 ºC and the wavelength to acquire data is 320.16 nm. For sample preparation 0.3g of sample is dissolved in 7.5 ml of a solvents mixture based on 5 ml of tetrahydrofuran and 2.5 ml of a 10 % of potassium hydroxide solution in methanol, after heating this sample at 40ºC during 20 min, 1.4 ml of acetic acid is added. |
| Endcap level | The endcap level can be determined based on UV measurement to determine the amount of OH groups. Combined with the number average molecular weight the endcap level is then determined in accordance with Formula I. The UV spectrophotometer was a Perkin Elmer Lambda 800. Measurements were carried out on 0.01g of a polycarbonate sample dissolved in 10 ml of dichloromethane and placed into a quartz cuvette of 10 mm of optical path. The wavelength to acquire data are 284 and 292 nm. The results from the equipment as ppm of OH are used to calculate the endcap using also the molecular weight of the polycarbonate and according to the formula for calculation as disclosed herein. Polycarbonate(s) with known amount(s) of OH groups were used as standards for the UV measurements. In case the polycarbonate contains UV absorbing additives measurements at further wavelengths (300, 343 and 400 nm) may be required for an accurate determination of the Endcap level. |
| Melt volume rate (MVR) | The melt volume rate was determined in accordance with ISO 1133 at a temperature of 300°C and a load of 1.2 kg. |
| Mw | The weight average molecular weight was determined based on a GPC method. An Agilent 1100 series GPC was used with a MWD G1365B detector. The column is a PL gel 5 μm MimMix-C 250x4.6mm; the solvent is dichloromethane, with 0.5 ml/min of flow, in an isocratic mode. The injection volume is 50 μL. For sample preparation, 0.02g of the sample are dissolved in 20 ml of dichloromethane. Polystyrene is used as Mw standards to calibrate the equipment. The wavelength used to acquire data is 254.16 nm. |

Polycarbonate

| | Method of manufacture | MVR (cc/10min) | EC% | OH [ppm] | Fries [ppm] |
|---|---|---|---|---|---|
| PC1 | bisphenol A polycarbonate homopolymer made by melt method | 18.0 | 68 | 930 | 1250 |

Polyethyleneglycol with a molelcular weight of about 400 g/mol (PEG400) was obtained from Sigma Aldrich. Glycerolmonostearate (GMS) was obtained from Riken Vitamin . Butyl tosylate (BuTos) was obtained from Sigma Aldrich and Phosphoric acid ($H_3PO_3$) was obtained from Sigma Aldrich.

PC1 was compounded with additives as shown in Table 1 on a Coperion ZSK26M twinscrew extruder (26 mm) under the following conditions:

| **Parameters** | **Default Values** |
|---|---|
| Barrel 1 | 260 ºC |
| Barrel 2 | 270 ºC |
| Barrel 3 | 280 ºC |
| Barrel 4 | 290 ºC |
| Barrel 5 | 300 ºC |
| Barrel 6 | 300 ºC |
| Barrel 7 | 300 ºC |
| Die | 290 ºC |
| Screw speed | 300 r.p.m. |

(continued)

| Parameters | Default Values |
|---|---|
| Throughput | 15 Kg/h |
| Vacuum | No |

The obtained composition were molded into plaques with a thickness of 3 mm after which a 2-component polyurethane coating was applied. The polyurethane coating was Puroclear 3351iTavailable from the company Rühl. This coating is a two-component polyurethane coating comprising a polyester polyol and an isocyanate wherein the weight ratio of polyol to isocyanate is 100: 230. The cured coating had a thickness of 0.6 mm.

The coated and fully cured articles were subjected to an aging cycle in accordance with the BMW PR 303.5b climate test. It comprises exposing, in cycles, the articles to temperatures within a range of -30°C to 80 °C cycles and at different relative humidity conditions. The total duration of the cycles is 240 hours. The BMW PR 303.5b climate test is well-known to the skilled person.

The peel test was carried out in accordance with ISO 8510-1 Adhesives - Peel test for a flexible-bonded-to-rigid test specimen assembly - Part 1 90° peel. Tensile testing machine was a Lloyds Tensile/Compression machine, serial number: T9270 Model: RL30K Including a 10kN calibrated force load cell. Test speed (grip separation): 50 mm/min. ± 5mm/min. Propagation distance (refers to peel length): 75 mm ± 5mm. Peel off force was measured. The average force was calculated between 20 and 50 mm peel off distance and an average over 5 samples was taken and is shown in Table 1.

Table 1

| Example | Additive | Amount [ppm] | Peel off force [N] | Mw |
|---|---|---|---|---|
| CE1 | None | 0 | 2.6 | 50821 |
| E1 | PEG400 | 5000 | 4.1 | 51488 |
| E2 | PEG400 | 8000 | 4.0 | 50947 |
| CE3 | BuTos | 4 | 2.1 | 50963 |
| CE4 | BuTos | 8 | 2.0 | 50759 |
| CE5 | H3PO3 | 2 | 2.3 | 50510 |
| CE6 | H3PO3 | 4 | 1.3 | 50856 |
| CE7 | GMS | 360 | 2.7 | 50736 |

It can be understood from Table 1 that the addition of PEG400 resulted in a better adhesion of the polyurethane coating to the carrier. BuTos and H3PO3 had a detrimental effect to the peel office force and the detrimental effect increased with an increased concentration. GMS, which was added in an amount to reduce the risk of plate out during molding, had essentially no effect on the peel off force.

For CE1, both fracture surfaces were analyzed by TOF-SIMS for chemical composition. The compositions of both sides of the fracture surface were similar to pure polycarbonate (i.e. the uncoated side of the carrier sample). It was however observed that the fracture surfaces have higher loadings of low molecular weight components (C9 to C14 components) than pure polycarbonate and further have a nitrogen containing compound.

It can therefore be concluded that after ageing, delamination of the polyurethane film from the polycarbonate carrier takes place in a layer in the polycarbonate carrier, very close to the surface of the polyurethane film. This layer comprises degraded polycarbonate which cannot bear the load during delamination and therefore fails. PEG400 is believed to prevent this degradation of polycarbonate and thus improves the adhesion of the polyurethane coating to the carrier.

**Claims**

**1.** Article comprising a carrier provided at least in part with a coating layer, wherein

- said carrier comprises or consists of a thermoplastic composition, said thermoplastic composition comprising polycarbonate,
- said coating layer is applied directly on said carrier and comprises or consists of polyurethane obtained by

reacting at least one poly-isocyanate and at least one polyol,
- said thermoplastic composition comprises a hydroxy compound selected from the group consisting of

a polyol compound represented by formula (I):

$$HO-(R^1X)_m-A-(R^2Y)_n-H \qquad (I)$$

wherein $R^1$ and $R^2$ each independently represent an alkylene group having 1 or more carbon atoms, X and Y each independently represent oxygen, an ester group or a carbonate group, m and n each independently represent an integer, m+n is 5 to 500,
and A represents a single bond or a divalent organic group and
an acrylic compound represented by formula (II):

$$H-(CH_2-C(R^3)(C{=}O)OR^4)_p-(CH_2-C(R^5)(R^6OH))_q-(CH_2-C(R^7)(R^8))_r-H \qquad (II)$$

wherein $R^3$, $R^5$, and $R^7$ each independently represent H or an alkylene group having 1 or more carbon atoms, $R^4$, and $R^6$ each independently represent an alkylene group having 1 or more carbon atoms, $R^8$ represents an aromatic group, p represents an integer, q represents an integer of at least 1, r represents an integer and p+q+r is 5 to 500 and
combinations thereof,
wherein the amount of the hydroxy compound is 0.1 to 1.0 wt.% based on the weight of the thermoplastic composition.

**2.** The article of claim 1 wherein the hydroxy compound is a polyether compound represented by formula:

$$HO-(R^1O)_m-(R^2O)_n-H$$

**3.** The article of any one of the preceding claims wherein the hydroxy compound is selected from the group consisting of polyethylene glycol, polypropylene glycol, polytetramethylene glycol and polyoxytetramethylene-polyoxyethylene glycol and combinations thereof.

**4.** The article of any one of the preceding claims wherein the amount of the hydroxy compound based on the weight of the weight of the thermoplastic composition is 0.2 to 0.7 wt.%.

**5.** The article of any one of the preceding claims wherein the amount of the thermoplastic composition does not comprise glycerol mono-stearate or comprises glycerol mono-stearate in an amount of less than 1000 ppm, less than 500 ppm or less than 100 ppm, based on the weight of the thermoplastic composition.

**6.** The article of any one of the preceding claims wherein said polycarbonate comprises, based on the weight of the polycarbonate, at least 50 wt.% of a first polycarbonate having a hydroxyl content of at least 250 ppm, preferably at least 500ppm, more preferably at least 700 ppm, determined in accordance with the method set out in the description.

**7.** The article of any one of the preceding claims wherein the first polycarbonate is a melt polycarbonate.

**8.** The article of any one of the preceding claims wherein the polycarbonate has a melt volume rate of from 4-40 $cm^3$/ 10 min. as measured in accordance with ISO 1133 (1.2 kg, 300°C).

**9.** The article of any one or more of the preceding claims wherein the polycarbonate composition essentially consists of bisphenol A polycarbonate homopolymer.

**10.** The article of any one or more of the preceding claims wherein the polyurethane has an isocyanate index, as defined in the specification, of from 0.90 - 1.2, preferably from 0.95 - 1.1.

**11.** The article of any one or more of the preceding claims wherein the coating thickness, determined after curing, is at least 50 $\mu$m, preferably at least 100 $\mu$m, more preferable at least 250 $\mu$m and at most 5000 $\mu$m, preferably at most 4000 $\mu$m, more preferably at most 2500 $\mu$m.

**12.** The article of any one or more of the preceding claims wherein the article is selected from the group consisting of vehicle interior articles, vehicle exterior articles and electrical/electronic devices.

**13.** A front panel of an electrical vehicle comprising or consisting of the article of any one or more of claims 1-12.

**14.** Vehicle, preferably an electrical vehicle, comprising a front panel comprising or consisting of the article of any one or more of claims 1 - 12, said front panel being a panel facing the forward direction of the vehicle.

**15.** Method for the manufacture of the article of any one or more of claims 1 - 12 comprising the steps of

i) injecting an amount of thermoplastic composition in a mould thereby forming said carrier by means of injection moulding,
ii) cooling the injection moulded article,
iii) applying a two-component polyurethane coating containing at least one poly-isocyanate and at least one polyol directly on at least part of the injection moulded article,
iii) curing the coating,

wherein said thermoplastic composition comprises a hydroxy compound selected from the group consisting of
a polyol compound represented by formula (I):

$$HO\text{-}(R^1X)_m\text{-}A\text{-}(R^2Y)_n\text{-}H \qquad (I)$$

wherein $R^1$ and $R^2$ each independently represent an alkylene group having 1 or more carbon atoms, X and Y each independently represent oxygen, an ester group or a carbonate group, m and n each independently represent an integer, m+n is 5 to 500,
and A represents a single bond or a divalent organic group and
an acrylic compound represented by formula (II):

$$H\text{-}(CH_2\text{-}C(R^3)(C{=}O)OR^4)_p\text{-}(CH_2\text{-}C(R^5)(R^6OH))_q\text{-}(CH_2\text{-}C(R^7)(R^8))_r\text{-}H \qquad (II)$$

wherein $R^3$, $R^5$, and $R^7$ each independently represent H or an alkylene group having 1 or more carbon atoms, $R^4$, and $R^6$ each independently represent an alkylene group having 1 or more carbon atoms, $R^8$ represents an aromatic group, p represents an integer, q represents an integer of at least 1, r represents an integer and p+q+r is 5 to 500 and
combinations thereof,
wherein the amount of the hydroxy compound is 0.1 to 1.0 wt.% based on the weight of the thermoplastic composition.

Europäisches Patentamt
European Patent Office
Office européen des brevets

# EUROPEAN SEARCH REPORT

Application Number
EP 25 38 2074

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2016/244609 A1 (HUFEN RALF [DE] ET AL) 25 August 2016 (2016-08-25)<br>* claims 1,8; table 1 *<br>----- | 1-15 | INV.<br>C08G18/42<br>B32B27/18<br>B32B27/36<br>B32B27/40 |

TECHNICAL FIELDS SEARCHED (IPC)

C08G
B32B

The present search report has been drawn up for all claims

| Place of search | Date of completion of the search | Examiner |
|---|---|---|
| Munich | 2 July 2025 | Bergmeier, Martin |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 38 2074

This annex lists the patent family members relating to the patent documents cited in the above-mentioned European search report. The members are as contained in the European Patent Office EDP file on
The European Patent Office is in no way liable for these particulars which are merely given for the purpose of information.

02-07-2025

| Patent document cited in search report | Publication date | Patent family member(s) | Publication date |
|---|---|---|---|
| US 2016244609 A1 | 25-08-2016 | CN 105637020 A | 01-06-2016 |
| | | EP 3058016 A1 | 24-08-2016 |
| | | ES 2643074 T3 | 21-11-2017 |
| | | KR 20160073388 A | 24-06-2016 |
| | | US 2016244609 A1 | 25-08-2016 |
| | | WO 2015055719 A1 | 23-04-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20190232621 A
- US 20190153218 A
- US 200201670177 A
- US 5688837 A
- US 20110027575 A
- US 20060151911 A
- WO 2024017706 A
- EP 4309865 A
- US 5567802 A
- US 5886073 A